# DEMANDE DE BREVET EUROPEEN

(11) **EP 4 301 079 A2**
(43) Date de publication de la demande: **03.01.2024**
(21) Numéro de dépôt: 23196557.5
(22) Date de dépôt: 29.09.2017
(51) Int. Cl.: H04W 74/08

(54) **PROCÉDÉ D'ÉMISSION, PAR UN TERMINAL D'UN SYSTÈME DE COMMUNICATION À ACCÈS PAR SLOT, D'UN MESSAGE AVEC SAUTS DE FRÉQUENCE INTRA-MESSAGE**

(30) Priorité: 29.09.2016 FR 1659363
(62) Demande divisionnaire de: 17772451.5
(71) Demandeur: Airbus Defence and Space SAS, 31402 Toulouse Cedex 4 (FR)
(72) Inventeur: GADAT, Benjamin, 31402 TOULOUSE Cedex 04 (FR); DESLANDES, Vincent, 31402 TOULOUSE Cedex 04 (FR)
(74) Mandataire: Ipside

(57) **Abrégé**

La présente invention concerne un procédé (50) d'émission, par un terminal (10), d'un message à destination d'une station de réception (20) d'un système de communication sans fil, ledit message devant être émis sur un canal partagé sur lequel l'émission de messages est effectuée au début d'intervalles de temps prédéterminés, dits « slots », **caractérisé en ce que** ledit procédé (50) d'émission comporte :
- un encodage (51) de données à inclure dans le message à émettre,
- une répartition (52) des données encodées entre Nb sous-messages du message à émettre, Nb étant un nombre entier supérieur ou égal à deux,
- une sélection (53) d'un slot pour l'émission dudit message,
- une sélection (54) de Nb fréquences d'émission, associées respectivement aux Nb sous-messages du message,
- une émission (55) du message au début du slot sélectionné, en émettant successivement les sous-messages sur leurs fréquences d'émission associées respectives.

## Description

### DOMAINE TECHNIQUE

La présente invention appartient au domaine des systèmes de communication sans fil, et concerne plus particulièrement un protocole d'accès, par un terminal, à un canal partagé avec d'autres terminaux pour communiquer avec une station de réception.

### ÉTAT DE LA TECHNIQUE

La présente invention trouve une application particulièrement avantageuse, bien que nullement limitative, dans le cas d'un système de communication par satellite en orbite terrestre.

Dans les systèmes de communication par satellite, on connaît de nombreux protocoles d'accès à un canal partagé.

Notamment, dans le protocole ALOHA, l'accès est aléatoire, et chaque terminal sélectionne de manière aléatoire l'instant d'émission d'un message. Avec une telle approche, des collisions entre messages émis par des terminaux différents peuvent se produire, et le protocole ALOHA vise également à introduire des mécanismes permettant de résoudre les collisions.

Le protocole ALOHA a donné lieu à de nombreuses évolutions, et notamment l'évolution connue sous le nom de « Slotted ALOHA », dans laquelle l'instant d'émission, toujours sélectionné de manière aléatoire par chaque terminal, ne peut cependant prendre qu'un certain nombre de valeurs discrètes, qui correspondent aux instants de début d'intervalles de temps prédéterminés, dits « slots ». Le protocole Slotted ALOHA permet, par rapport au protocole ALOHA, d'améliorer la capacité d'utilisation du canal partagé.

Une évolution du protocole Slotted ALOHA, connue sous le nom de CRDSA (« Contention Resolution Diversity Slotted ALOHA »), est par exemple mise en oeuvre dans le standard DVB-RCS2. Dans le protocole CRDSA, un même message est répliqué plusieurs fois, et chaque réplique de ce même message est émise au début d'un slot sélectionné de manière aléatoire, toutes les répliques étant émises à l'intérieur d'une fenêtre comportant un nombre Ns prédéterminé de slots (Ns étant supérieur au nombre de répliques).

De nos jours, il est envisagé de collecter depuis des satellites en orbite terrestre des messages émis par des objets connectés terrestres ou aériens. Etant donné que de nombreux objets de la vie de tous les jours ont vocation à devenir des objets connectés, de nombreux objets connectés seront susceptibles d'essayer d'accéder au canal partagé sensiblement en même temps. On comprend donc que, même en sélectionnant de manière aléatoire l'instant d'émission d'un message, de nombreuses collisions seront susceptibles de se produire.

Pour résoudre ces collisions, il est par exemple possible de mettre en oeuvre, au niveau de la station de réception, des techniques bien connues de suppression d'interférences. Notamment, la technique de suppression successive d'interférences (« Successive Interférence Cancellation » ou SIC dans la littérature anglo-saxonne) permet de résoudre certaines collisions, c'est-à-dire permet de décoder des messages même en présence de collisions.

Toutefois, dans le cas d'une collecte de messages émis par des objets connectés, le nombre de collisions, dans le cas des protocoles d'accès existants, est potentiellement tellement important que de nombreux messages sont susceptibles d'être perdus, même en appliquant des techniques de suppression d'interférences.

### EXPOSÉ DE L'INVENTION

La présente invention a pour objectif de remédier à tout ou partie des limitations des solutions de l'art antérieur, notamment celles exposées ci-avant, en proposant un protocole d'accès à un canal partagé qui permette de réduire la durée de collision entre deux messages donnés.

A cet effet, et selon un premier aspect, la présente invention concerne un procédé d'émission, par un terminal, d'un message à destination d'une station de réception d'un système de communication sans fil, ledit terminal étant synchronisé temporellement avec ladite station de réception, ledit message devant être émis sur un canal partagé avec d'autres terminaux sur lequel l'émission de messages à destination de ladite station de réception est effectuée au début d'intervalles de temps prédéterminés pour le terminal et la station de réception, dits « slots ». Ledit procédé d'émission comporte :
- un encodage de données à inclure dans le message à émettre au moyen d'un codeur de canal,
- une répartition des données encodées entre Nb sous-messages du message à émettre, par fragmentation desdites données encodées en Nb fragments, Nb étant un nombre entier supérieur ou égal à deux,
- une sélection d'un slot pour l'émission dudit message,
- une sélection de Nb fréquences d'émission, associées respectivement aux Nb sous-messages du message,
- une émission du message au début du slot sélectionné, en émettant successivement les sous-messages sur leurs fréquences d'émission associées respectives.

Ainsi, les données à émettre dans un message sont encodées au moyen d'un codeur de canal, et les données encodées sont fragmentées en Nb fragments pour former Nb sous-messages respectifs différents constituant le message à émettre. Les sous-messages formant ledit message sont ensuite émis successivement sur des fréquences d'émission respectives différentes.

En d'autres termes, dans le protocole d'accès ainsi défini, l'émission d'un message peut se faire uniquement à des instants prédéterminés, correspondant au début de slots, et ladite émission comporte en outre des sauts de fréquence d'émission intra-message.

D'une part, du fait que la fréquence d'émission varie d'un sous-message à un autre d'un même message, la probabilité d'avoir, entre deux messages émis par deux terminaux différents, des collisions sur plusieurs sous-messages est fortement réduite.

D'autre part, le fait que les données encodées soient réparties dans des sous-messages différents permet d'exploiter la diversité fréquentielle introduite par les sauts de fréquence d'émission intra-message, ce qui permet d'améliorer le décodage du message en présence de collisions partielles ne concernant que certains sous-messages.

Dans des modes particuliers de mise en oeuvre, le procédé d'émission peut comporter en outre l'une ou plusieurs des caractéristiques suivantes, prises isolément ou selon toutes les combinaisons techniquement possibles.

Dans des modes particuliers de mise en oeuvre, chaque fréquence d'émission de sous-message est sélectionnée aléatoirement par ledit terminal à l'intérieur d'une bande fréquentielle prédéterminée.

Dans des modes particuliers de mise en oeuvre, le procédé d'émission comporte une insertion, uniquement dans le sous-message à émettre en premier sur le canal, d'un motif de détection prédéterminé.

Dans des modes particuliers de mise en oeuvre, le procédé d'émission comporte une fragmentation d'un motif de détection prédéterminé en Nb fragments du motif de détection, chaque fragment du motif de détection étant inclus dans l'un des sous-messages du message à émettre.

Dans des modes particuliers de mise en oeuvre, le motif de détection est une séquence de Gold.

Dans des modes particuliers de mise en oeuvre, le message est entièrement émis à l'intérieur du slot sélectionné.

Dans des modes particuliers de mise en oeuvre, chaque sous-message est un signal à bande ultra-étroite.

Selon un second aspect, la présente invention concerne un terminal pour l'émission d'un message à destination d'une station de réception d'un système de communication sans fil, ledit message devant être émis sur un canal partagé avec d'autres terminaux sur lequel l'émission de messages à destination de ladite station de réception est effectuée au début d'intervalles de temps prédéterminés, dits « slots ». Ledit terminal comporte :
- des moyens configurés pour encoder des données à inclure dans le message à émettre,
- des moyens configurés pour répartir les données encodées entre Nb sous-messages du message à émettre, Nb étant un nombre entier supérieur ou égal à deux,
- des moyens configurés pour sélectionner un slot pour l'émission dudit message,
- des moyens configurés pour sélectionner Nb fréquences d'émission, associées respectivement aux Nb sous-messages du message,
- des moyens configurés pour émettre le message au début du slot sélectionné, en émettant successivement les sous-messages sur
leurs fréquences d'émission associées respectives.

Selon un troisième aspect, la présente invention concerne un système de communication sans fil comportant au moins une station de réception et une pluralité de terminaux selon l'un quelconque des modes de réalisation de l'invention.

Dans des modes préférés de réalisation, la station de réception est embarquée dans un satellite en orbite terrestre.

### PRÉSENTATION DES FIGURES

L'invention sera mieux comprise à la lecture de la description suivante, donnée à titre d'exemple nullement limitatif, et faite en se référant aux figures qui représentent :
- Figure 1 : une représentation schématique d'un exemple de réalisation d'un système de communication sans fil,
- Figure 2 : un diagramme représentant les principales étapes d'un procédé d'émission d'un message sur un canal partagé,
- Figure 3 : une illustration du déroulement des différentes étapes d'un exemple particulier de mise en oeuvre du procédé d'émission de la figure 2.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

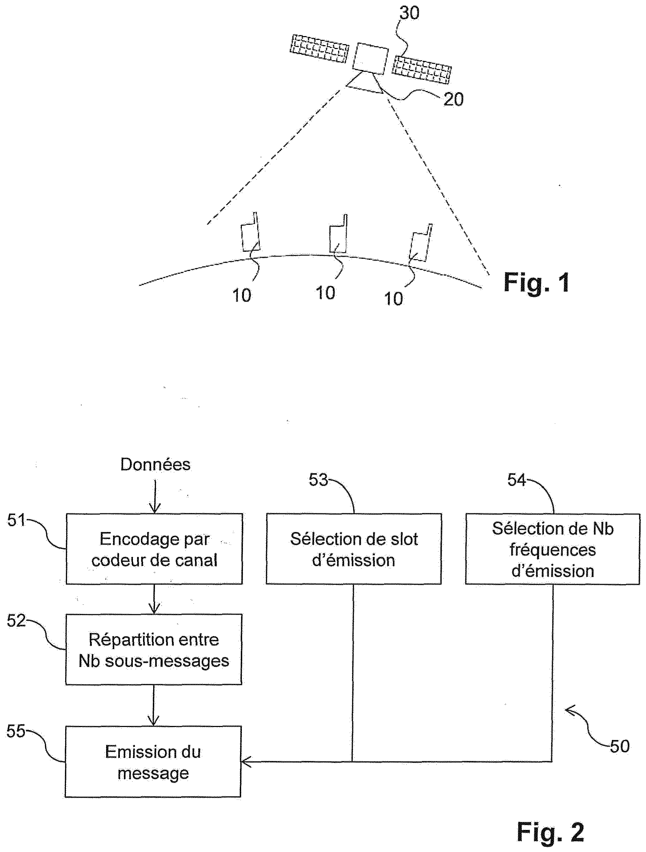

La figure 1 représente schématiquement un exemple de réalisation d'un système de communication sans fil comportant une pluralité de terminaux 10 et une station de réception 20.

Dans la suite de la description, et tel qu'illustré par la figure 1, on se place de manière non limitative dans le cas où la station de réception 20 est embarquée dans un satellite 30 en orbite terrestre, et où les terminaux 10 se trouvent sensiblement à la surface de la Terre. Par « sensiblement à la surface de la Terre », on entend que chaque terminal 10 est au sol (terrestre ou maritime), ou bien en altitude dans l'atmosphère terrestre (embarqué dans un avion, un drone, un ballon, etc.). Rien n'exclut cependant, suivant d'autres exemples, d'avoir par exemple une station de réception embarquée dans un engin spatial ou aérien (avion, drone, ballon, etc.). La station de réception peut également, suivant d'autres exemples, être au sol (terrestre ou maritime).

Le satellite 30 est de préférence en orbite basse altitude LEO (« Low Earth Orbit »). Rien n'exclut cependant de considérer d'autres types d'orbites, par exemple une orbite moyenne altitude MEO (« Medium Earth Orbit »), une orbite géostationnaire GEO (« Geostationary Orbit »), etc.

Chaque terminal 10 est susceptible d'émettre des messages sur un canal à destination de la station de réception 20. Le canal entre les terminaux 10 et la station de réception 20 correspond à une bande fréquentielle prédéterminée, partagée par l'ensemble des terminaux 10. Il est à noter que cette bande fréquentielle, formant le canal partagé, peut être constituée d'une seule plage continue de fréquences ou, alternativement, de plusieurs plages continues de fréquences disjointes entre elles.

L'émission de messages sur le canal partagé, à destination de la station de réception 20, est effectuée uniquement au début d'intervalles de temps prédéterminés, dits « slots ». Une telle approche nécessite, de manière connue, d'assurer une synchronisation temporelle entre les terminaux 10 et la station de réception 20. Les moyens susceptibles d'être mis en oeuvre pour assurer cette synchronisation temporelle sont considérés comme connus de l'homme du métier et sortent du cadre de la présente invention.

Par « émettre au début d'un slot », on entend que le terminal 10 cherche à démarrer son émission à un instant prédéterminé, un slot étant défini comme l'intervalle de temps délimité par deux instants possibles d'émission consécutifs. Par contre, il n'est pas nécessaire que l'émission d'un message démarre exactement au début d'un slot. Cela dépend notamment de la précision de la synchronisation temporelle entre les terminaux 10 et la station de réception 20, de la prise en compte ou non du temps de propagation entre un terminal 10 et la station de réception 20 embarquée dans le satellite 30 (pour assurer que le message émis est reçu à un instant prédéterminé), etc.

Mise à part la contrainte à l'émission de messages uniquement au début de slots prédéterminés, les terminaux 10 déterminent de préférence de manière unilatérale quand émettre des messages. En d'autres termes, la station de réception 20 ne sait pas a priori si elle est susceptible de recevoir un message d'un terminal 10 donné, ladite station de réception sait uniquement que, si elle doit recevoir un message de ce terminal 10 ou d'un autre, cela ne peut se produire qu'à des instant prédéterminés.

La figure 2 représente les principales étapes d'un procédé 50 d'émission, par un terminal 10, d'un message sur le canal partagé à destination de la station de réception 20. Tel qu'illustré par la figure 2, le procédé 50 d'émission comporte principalement des étapes de :
- 51 encodage de données à inclure dans le message à émettre au moyen d'un codeur de canal,
- 52 répartition des données encodées entre Nb sous-messages du message à émettre, Nb étant un nombre entier supérieur ou égal à deux,
- 53 sélection d'un slot pour l'émission dudit message,
- 54 sélection de Nb fréquences d'émission, associées respectivement aux Nb sous-messages du message,
- 55 émission du message au début du slot sélectionné, en émettant successivement les sous-messages sur leurs fréquences d'émission associées respectives.

Ainsi, les données à émettre dans un message sont encodées au moyen d'un codeur de canal, présentant un taux de codage R (R < 1), et les données encodées sont réparties dans Nb sous-messages différents constituant le message à émettre. Les sous-messages formant ledit message sont ensuite émis successivement sur des fréquences d'émission respectives différentes, réalisant des sauts de fréquence d'émission intra-message.

En effet, cette décomposition du message en Nb sous-messages est réalisée par le protocole de couche physique utilisé pour l'échange de données entre le terminal 10 et la station de réception 20, de sorte que la fréquence d'émission varie au sein d'un même message, indépendamment du fait de savoir si ladite fréquence d'émission varie en outre d'un message à un autre. Il est d'ailleurs à noter que toutes les étapes représentées sur la figure 2 sont des étapes exécutées dans le cadre dudit protocole de couche physique.

De préférence, le codeur de canal et la répartition des données encodées dans les différents sous-messages sont tels qu'il est toujours possible de décoder les données à partir de (Nb-1) sous-messages quelconques parmi les Nb sous-messages, en l'absence de bruit et/ou d'interférences. Afin de ne pas avoir un taux de codage R trop faible, le codeur de canal et la répartition des données encodées dans les différents sous-messages sont tels qu'il n'est pas possible de décoder les données à partir d'un seul sous-message, même en l'absence de bruit et d'interférences. Le taux de codage R est donc de préférence strictement supérieur à 1/Nb (R > 1/Nb). Dans des modes préférés de mise en oeuvre, le nombre Nb de messages est égal ou supérieur à trois, et le taux de codage R est strictement supérieur à 1 /Nb et égal ou inférieur à (Nb-1)/Nb.

Dans la suite de la description, on se place de manière non limitative dans le cas où Nb est égal à trois (Nb = 3). Le codeur de canal et la répartition des données encodées dans les différents sous-messages sont tels qu'il est toujours possible de décoder les données à partir de deux sous-messages quelconques parmi les trois (Nb = 3) sous-messages, et tels qu'il n'est pas possible de décoder les données à partir d'un seul sous-message.

Les différentes étapes illustrées par la figure 2 sont de préférence toutes exécutées par le terminal 10.

Par exemple, le terminal 20 comporte à cet effet un circuit de traitement (non représenté sur les figures), comportant un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre tout ou partie des étapes du procédé 50 d'émission de messages. Alternativement ou en complément, le circuit de traitement comporte un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 50 d'émission de messages.

Le terminal 20 comporte également des moyens de communication sans fil, mis en oeuvre au cours de l'étape 55 d'émission, permettant audit terminal 10 d'émettre les messages sous la forme de signaux radioélectriques. Les moyens de communication sans fil se présentent de manière conventionnelle sous la forme d'un circuit radioélectrique comportant des équipements (antenne, amplificateur, oscillateur local, mélangeur, filtre analogique, etc.) considérés comme connus de l'homme de l'art.

En d'autres termes, le circuit de traitement et le circuit radioélectrique du terminal 10 forment un ensemble de moyens configurés de façon logicielle (produit programme d'ordinateur spécifique) et/ou matérielle (FPGA, PLD, ASIC, composants électroniques discrets, etc.) pour mettre en oeuvre l'ensemble des étapes du procédé 50 d'émission de messages. Ces moyens réalisent notamment un codeur de canal, un répartiteur des données, un sélectionneur de slot, un sélectionneur de fréquences d'émission et un émetteur des sous-messages.

Au cours de l'étape 51, les données à inclure dans le message sont encodées au moyen d'un codeur de canal. Le codeur de canal fait partie des traitements du protocole de couche physique utilisé pour les communications entre le terminal 10 et la station de réception 20, et les données à encoder correspondent à une unité de données de service (« Service Data Unit » ou SDU dans la littérature anglo-saxonne) reçue de la couche protocolaire se trouvant au-dessus de la couche physique.

De manière générale, tout type de codeur de canal connu de l'homme de l'art peut être mis en oeuvre au cours de l'étape 51 d'encodage, et le choix d'un codeur de canal particulier ne constitue qu'une variante d'implémentation de l'invention. Dans des modes préférés de mise en oeuvre, le codeur de canal correspond à un turbo code. Rien n'exclut cependant, suivant d'autres exemples, de considérer d'autres types de codeurs de canal, et/ou de considérer une combinaison de codeurs de canal différents. Notamment, il est possible, selon des variantes de l'invention, de considérer un codeur de canal mettant en oeuvre un code LDPC (« Low Density Parity Check »), un code convolutif, etc.

Au cours de l'étape 52, les données encodées sont réparties entre Nb sous-messages. Il est à noter que cette étape 52 de répartition peut consister en une simple fragmentation des données encodées ou, dans des modes préférés de mise en oeuvre, peut comporter en outre, notamment, un entrelacement des données encodées avant fragmentation. De préférence, chaque sous-message comporte la même quantité de données encodées. Dans un tel cas, si le nombre de données encodées obtenues à l'issue de l'étape 51 d'encodage est égal à Nc, alors le nombre de données encodées incluses dans chaque sous-message est égal à Nc/Nb. Rien n'exclut cependant, suivant d'autres exemples, de répartir les données encodées de telle sorte que les sous-messages ne comportent pas tous la même quantité desdites données encodées et ne présentent pas nécessairement tous la même durée lors de leur émission. De préférence, les durées respectives des sous-messages sont connues a priori de ou déterminables par la station de réception 20 ou par un équipement en charge de l'extraction.

Au cours de l'étape 53, le terminal 10 sélectionne un slot pour l'émission du message. Le slot à utiliser, parmi les slots possibles, est par exemple sélectionné de manière aléatoire par ledit terminal 10. De manière générale, toute méthode de sélection de slot peut être mise en oeuvre, et le choix d'une méthode particulière ne correspond qu'à une variante d'implémentation de l'invention.

A cours de l'étape 54, le terminal 10 sélectionne Nb fréquences d'émission, associées respectivement aux Nb sous-messages constituant le message à émettre sur le canal partagé.

De préférence, les Nb fréquences d'émission sont toutes différentes. Rien n'exclut cependant, suivant d'autres exemples de mise en oeuvre, d'avoir certaines fréquences d'émission égales, dès lors que les Nb fréquences d'émission ne sont pas toutes identiques.

Dans des modes préférés de mise en oeuvre, les fréquences d'émission sont sélectionnées, au niveau de chaque terminal 10, de manière aléatoire. Dans un tel cas, on comprend que les Nb fréquences d'émission sélectionnées ne sont pas connues a priori de la station de réception 20. En sélectionnant de la sorte les Nb fréquences d'émission, pour deux terminaux 10 distincts ayant sélectionné une même fréquence d'émission pour un sous-message, la probabilité de sélectionner à nouveau une même fréquence d'émission pour le sous-message suivante est faible. Rien n'exclut cependant, suivant d'autres exemples, d'utiliser pour un terminal 10 donné une séquence de sauts de fréquence d'émission prédéterminée, de préférence connue a priori de ou déterminable par la station de réception 20 ou par un équipement en charge de l'extraction des données incluses dans les messages reçus par ladite station de réception 20, ladite séquence de sauts de fréquence d'émission étant en outre différente des séquences de sauts de fréquence d'émission des autres terminaux 10.

Dans le cas où les fréquences d'émission sont sélectionnées de manière aléatoire, et ne sont donc pas connues a priori de la station de réception 20 ou par un équipement en charge de l'extraction, il est possible, pour faciliter l'extraction des données, d'inclure dans chaque sous-message une information de contrôle permettant de déterminer la fréquence d'émission du sous-message suivant (et/ou du sous-message précédent, et/ou de tous les autres sous-messages, etc.).

Ensuite, au cours de l'étape 55, le message est émis au début du slot sélectionné, en émettant successivement les sous-messages sur leurs fréquences d'émission associées respectives.

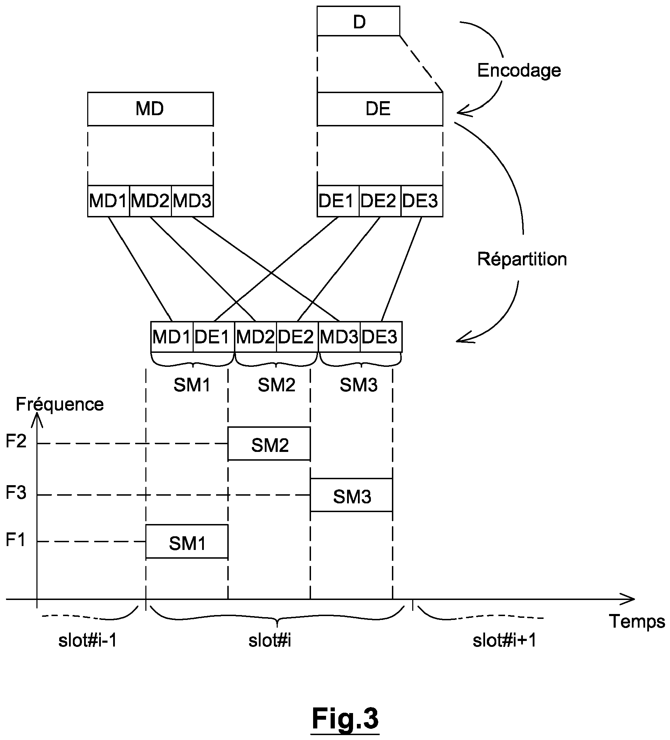

La figure 3 représente schématiquement le déroulement des différentes étapes du procédé 50 d'émission, à partir de données D à inclure dans un message.

Tel qu'illustré par la figure 3, les données D sont encodées pour obtenir des données encodées DE. De manière bien connue, un codeur de canal rajoute de la redondance aux données, et le nombre Nc de données encodées est supérieur au nombre de données D à inclure dans le message.

Les données encodées DE sont ensuite réparties dans Nb sous-messages. Dans l'exemple non limitatif illustré par la figure 3, Nb est égal à trois (Nb = 3) et les sous-messages sont désignés par respectivement SM1, SM2 et SM3. En outre, dans l'exemple illustré par la figure 3, la répartition consiste principalement en une fragmentation des données encodées DE en Nb fragments, désignés par respectivement DE1, DE2 et DE3.

De manière générale, des informations de contrôle, permettant de faciliter la détection et/ou l'extraction des données à partir du message, peuvent également être incluses dans l'un au moins des sous-messages. Dans l'exemple illustré par la figure 3, les informations de contrôle comportent un motif de détection MD, permettant de faciliter la détection du message émis. Le motif de détection MD est de préférence le même pour tous les terminaux 10, mais rien n'exclut de considérer différents motifs de détection associés à différents terminaux 10. De préférence, le motif de détection MD est un motif présentant de bonnes propriétés de corrélation, tel qu'une séquence de Gold. Dans l'exemple illustré par la figure 3, le motif de détection est fragmenté en Nb fragments, désignés par respectivement MD1, MD2 et MD3 :
- le fragment MD1 du motif de détection MD est inclus dans le sous-message SM1 avec le fragment DE1 des données encodées,
- le fragment MD2 du motif de détection MD est inclus dans le sous-message SM2 avec le fragment DE2 des données encodées,
- le fragment MD3 du motif de détection MD est inclus dans le sous-message SM3 avec le fragment DE3 des données encodées.

Rien n'exclut cependant, suivant d'autres exemples, d'émettre le motif de détection MD entièrement dans un même sous-message du message émis, par exemple dans le sous-message SM1.

Du fait que le motif de détection MD est fragmenté, ou inclus entièrement dans un seul sous-message du message émis, on comprend que la quantité d'informations de contrôle incluse pour faciliter la détection du message n'est pas augmentée par rapport à un protocole de couche physique selon l'art antérieur ne comportant pas de sauts de fréquence intra-message.

Rien n'exclut cependant, suivant d'autres exemples, d'inclure dans chaque sous-message un motif de détection prédéfini, de préférence différent d'un sous-message à un autre pour permettre de distinguer plus facilement les différents sous-messages du message émis.

Le message est ensuite émis au début du slot sélectionné (désigné par « slot #i » sur la figure 3), en émettant successivement les sous-messages SM1, SM2 et SM3 sur les fréquences d'émission sélectionnées au cours de l'étape 54, désignées par respectivement F1, F2 et F3 sur la figure 3.

Dans l'exemple illustré par la figure 3, le sous-message SM2 est émis immédiatement après le sous-message SM1, et le sous-message SM3 est émis immédiatement après le sous-message SM2. Rien n'exclut cependant, suivant d'autres exemples, d'introduire un intervalle de silence entre deux sous-messages consécutifs. De préférence, l'écart temporel entre les instants de début d'émission de deux sous-messages consécutifs sont prédéterminés, connus a priori de ou déterminables par la station de réception 20 ou par un équipement en charge de l'extraction. Cet écart temporel est par exemple constant au cours du temps et le même pour tous les sous-messages consécutifs. Suivant un autre exemple, chaque sous-message peut comporter une information de contrôle permettant de déterminer quand le sous-message suivant (et/ou le sous-message précédent, et/ou tous les autres sous-messages, etc.) est susceptible d'être reçu, pour en faciliter la détection.

Dans l'exemple illustré par la figure 3, le message émis est de durée inférieure à la durée d'un slot, de sorte que les sous-messages SM1, SM2 et SM3 sont tous émis à l'intérieur du slot #i sélectionné. Ainsi, les sauts de fréquence d'émission sont à la fois intra-message et intra-slot. Rien n'exclut cependant, suivant d'autres exemples, d'avoir un message de durée supérieure à celle du slot sélectionné. Dans un tel cas, l'émission du message se poursuit au moins sur le slot qui suit le slot sélectionné. Par exemple, le message est émis de telle sorte que chaque sous-message est émis au début d'un slot. Dans l'exemple illustré par la figure 3, cela reviendrait à émettre le sous-message SM1 au début du slot #i sélectionné, puis le sous-message SM2 au début du slot #i+1, puis le sous-message SM3 au début du slot #i+2. Toutefois, de préférence, les sous-messages sont émis de telle sorte que seul le premier sous-message est émis au début d'un slot.

L'extraction des données reçues dans un ou plusieurs messages est réalisée par la station de réception 20 et/ou par un équipement, tel qu'une station sol, auquel la station de réception 20 transmet les messages reçus sous toute forme adaptée. L'extraction des données à partir d'un message reçu peut mettre en oeuvre toute méthode adaptée connue de l'homme du métier et sort du cadre de l'invention.

Tel qu'indiqué précédemment, il est possible d'intégrer des informations de contrôle permettant de faciliter la détection et/ou l'extraction des données d'un message. Notamment, les informations de contrôle permettant de déterminer les fréquences d'émission et/ou les instants d'émission des différents sous-messages d'un même message permettent d'identifier plus facilement les sous-messages appartenant à un même message. D'autres types d'informations de contrôle peuvent également être envisagés pour identifier les sous-messages appartenant à un même message, comme par exemple inclure dans chaque sous-message un numéro de séquence du message et/ou un identifiant du terminal ayant émis ledit message. Alternativement ou en complément, les sous-messages appartenant à un même message peuvent être identifiés en évaluant la cohérence de certains paramètres physiques des sous-messages détectés. Par exemple, si les écarts temporels entre sous-messages consécutifs d'un même message sont connus a priori, seuls des sous-messages dont les instants de détection vérifient ces écarts temporels sont susceptibles d'appartenir à un même message. En outre, des sous-messages appartenant à un même message sont soumis sensiblement aux mêmes conditions de propagation, de sorte qu'ils sont en principe cohérents en phase et sont reçus avec sensiblement la même puissance. En comparant les phases et/ou les puissances de réception des sous-messages détectés, il est donc également possible d'identifier les sous-messages qui sont susceptibles d'appartenir à un même message, même lorsqu'aucune information de contrôle n'a été incluse dans les sous-messages.

La description ci-avant illustre clairement que par ses différentes caractéristiques et leurs avantages, la présente invention atteint les objectifs qu'elle s'était fixés. En particulier, du fait que les données à émettre dans un message sous encodées et réparties dans plusieurs sous-messages qui sont émis sur des fréquences d'émission différentes, la durée maximale de collision entre deux messages donnés est fortement réduite par rapport à l'art antérieur, de sorte que la collision entre ces deux messages est plus facile à résoudre. Par conséquent, la station de réception 20 peut détecter un nombre plus important de messages reçus simultanément.

En outre, du fait que la décomposition en sous-messages s'effectue au niveau de la couche physique et non pas au niveau d'une couche supérieure telle que la couche d'accès au médium (« Medium Access Control » ou MAC dans la littérature anglo-saxonne), ladite décomposition peut être avantageusement réalisée en insérant moins d'informations de contrôle que dans le cas d'une décomposition au niveau d'une couche supérieure. Une telle décomposition au niveau de la couche physique peut même, dans des modes préférés de mise en oeuvre, être réalisée sans ajouter d'informations de contrôle par rapport à un protocole de couche physique selon l'art antérieur ne comportant pas de sauts de fréquence intra-message.

La présente invention trouve une application particulièrement avantageuse, bien que nullement limitative, dans le cas où chaque sous-message est un signal à bande ultra-étroite. Par « bande ultra étroite » (« Ultra Narrow Band » ou UNB dans la littérature anglo-saxonne), on entend que le spectre fréquentiel instantané de chaque sous-message est de largeur fréquentielle inférieure à deux kilohertz, voire inférieure à un kilohertz. En effet, l'invention peut alors être mise en oeuvre sans avoir à considérer un canal partagé de largeur fréquentielle trop importante, et peut être mise en oeuvre avec un canal partagé dont la largeur fréquentielle est de l'ordre de quelques dizaines de kilohertz à quelques centaines de kilohertz.

## Revendications

1. - Procédé (50) d'émission, par un terminal (10), d'un message à destination d'une station de réception (20) d'un système de communication sans fil, ledit terminal étant synchronisé temporellement avec ladite station de réception, ledit message devant être émis sur un canal partagé avec d'autres terminaux sur lequel l'émission de messages à destination de ladite station de réception est effectuée au début d'intervalles de temps prédéterminés pour le terminal (10) et la station de réception (20), dits « slots », ledit procédé (50) d'émission comportant :
- un encodage (51) de données à inclure dans le message à émettre au moyen d'un codeur de canal,
- une répartition (52) des données encodées entre Nb sous-messages du message à émettre, par fragmentation desdites données encodées en Nb fragments, Nb étant un nombre entier supérieur ou égal à deux,
- une sélection (53) d'un slot pour l'émission dudit message,
- une sélection (54) de Nb fréquences d'émission, associées respectivement aux Nb sous-messages du message,
- une émission (55) du message au début du slot sélectionné, en émettant successivement les sous-messages sur leurs fréquences d'émission associées respectives.

2. - Procédé (50) selon la revendication 1 dans lequel les Nb fréquences d'émission sont toutes différentes.

3. - Procédé (50) selon l'une des revendications précédentes, comportant une insertion, uniquement dans le sous-message à émettre en premier sur le canal, d'un motif de détection prédéterminé.

4. - Procédé (50) selon l'une des revendications 1 à 2, comportant une fragmentation d'un motif de détection prédéterminé en Nb fragments du motif de détection, chaque fragment du motif de détection étant inclus dans l'un des sous-messages du message à émettre.

5. - Procédé (50) selon l'une des revendications 3 à 4, dans lequel le motif de détection est une séquence de Gold.

6. - Procédé (50) selon l'une des revendications précédentes, dans lequel le message est entièrement émis à l'intérieur du slot sélectionné.

7. - Procédé (50) selon l'une des revendications précédentes, dans lequel chaque sous-message est un signal à bande ultra-étroite.

8. - Terminal (10) pour l'émission d'un message à destination d'une station de réception (20) d'un système de communication sans fil, ledit message devant être émis sur un canal partagé avec d'autres terminaux sur lequel l'émission de messages à destination de ladite station de réception est effectuée au début d'intervalles de temps prédéterminés, dits « slots », ledit terminal (10) comportant :
- des moyens configurés pour encoder des données à inclure dans le message à émettre,
- des moyens configurés pour répartir les données encodées entre Nb sous-messages du message à émettre, Nb étant un nombre entier supérieur ou égal à deux,
- des moyens configurés pour sélectionner un slot pour l'émission dudit message,
- des moyens configurés pour sélectionner Nb fréquences d'émission, associées respectivement aux Nb sous-messages du message,
- des moyens configurés pour émettre le message au début du slot sélectionné, en émettant successivement les sous-messages sur leurs fréquences d'émission associées respectives.

9. - Terminal (10) selon la revendication 8 pour lequel les Nb fréquences d'émission sélectionnées sont toutes différentes.

10. - Système de communication sans fil comportant au moins une station de réception (20), **caractérisé en ce qu'**il comporte une pluralité de terminaux (10) selon l'une quelconque des revendications 8 ou 9.

11. - Système selon la revendication 10, dans lequel la station de réception (20) est embarquée dans un satellite (30) en orbite terrestre.
